# EUROPÄISCHE PATENTSCHRIFT

(11) **EP 4 301 713 B1**
(45) Veröffentlichungstag und Bekanntmachung des Hinweises auf die Patenterteilung: **09.10.2024**
(21) Anmeldenummer: 21726592.5
(22) Anmeldetag: 10.05.2021
(51) Int. Cl.: C04B 28/06, C04B 38/10

(54) **VERWENDUNG VON SCHAUMMÖRTEL ALS KLEBEMITTEL FÜR BODENBELÄGE**
USE OF FOAM MORTAR AS ADHESIVE FOR FLOORINGS
UTILISATION DE MORTIER MOUSSE COMME ADHÉSIF POUR DES SOLS

(43) Veröffentlichungstag der Anmeldung: 10.01.2024
(73) Patentinhaber: Wacker Chemie AG, 81671 München (DE)
(72) Erfinder: BIENERTH, Holger, 81825 München (DE); BRUMMER, Josef, 84359 Simbach (DE); EDER, Klaus-Jürgen, 84335 Mitterskirchen (DE); ZEH, Harald, 84489 Burghausen (DE)
(74) Vertreter: Ege, Markus
(86) Internationale Anmeldenummer: PCT/EP2021/062371
(87) Internationale Veröffentlichungsnummer: WO 2022/237960

(56) Entgegenhaltungen:
- EP-A1- 0 857 166
- EP-B1- 0 857 166
- WO-A1-2009/127484
- US-A1- 2015 307 399

## Beschreibung

Die Erfindung betrifft die Verwendung von Schaummörtel als Klebemittel für Bodenbeläge, insbesondere als Fliesenkleber für keramische Fliesen, Natursteinfliesen oder Glasfliesen, sowie Verfahren zum Verlegen von Bodenbelägen.

Im Baubereich besteht zunehmend Bedarf an ökologischeren Bautechnologien, beispielsweise durch Substitution herkömmlicher Baustoffmaterialien durch nachwachsende oder weniger energieintensiv gewonnene Baustoffe oder durch Ressourcen sparenden Einsatz von Baustoffmaterialien. Hierbei müssen die Bauprodukte weiterhin die Baustoffnormen erfüllen und vorteilhafte anwendungstechnische Eigenschaften aufweisen. So müssen mit Klebemitteln auf einen Boden geklebte Bodenbeläge unter der üblichen Beanspruchung hinreichend auf dem Untergrund haften. Beispielsweise müssen zementäre Fliesenkleber die C1 Norm erfüllen, das heißt, eine Haftzugfestigkeit von mindestens 0,5 N/mm² haben. Zudem sollen Klebemittel auch vorteilhaft verarbeitbar sein, beispielsweise eine cremige Konsistenz haben, so dass der Kleber ergonomisch leicht applizierbar ist, eine hinreichende offene Zeit aufweist und somit in das Mörtelbett eingelegte Bodenbeläge, wie Fliesen, noch gut korrigierbar sind.

Vor diesem Hintergrund bestand die Aufgabe, Klebemittel für Bodenbeläge bereitzustellen, mit denen ein Ressourcen sparendes Verlegen von Böden ermöglicht wird und dabei die gewünschten anwendungstechnischen Eigenschaften erreicht werden, wie cremige Konsistenz oder offene Zeit des Klebemittels oder vorteilhafte Haftzugfestigkeiten der mit dem Klebemittel verklebten Bodenbeläge. Insbesondere im Falle des Einsatzes der Klebemittel als Fliesenkleber sollten die verlegten Fliesen die C1-Norm gemäß DIN 12004 erfüllen, das heißt vorzugsweise Haftzugfestigkeiten von mindestens 0,5 N/mm² erreichen.

Überraschenderweise wurde diese Aufgabe durch Einsatz von Schaummörtel als Klebemittel für Bodenbeläge gemäß Anspruch 1 gelöst.

Schaummörtel ist allgemein ein Klebemittel, das implizit in vermehrtem Umfang Luftporen enthält. Auf Grund dieses Luftporengehalts stellt es eine besondere Herausforderung dar, mit Schaummörteln die gewünschten mechanischen Eigenschaften, insbesondere Haftzugfestigkeiten, und zugleich die gewünschten Frischmörteleigenschaften, wie cremige Konsistenz oder offene Zeit, zu erreichen.

Zementäre Schäume haben in der Bauindustrie Anwendung als Dämmmaterial gefunden, sowohl zur Wärmedämmung als auch zur Schalldämmung, oder auch als Brandschutzmaterial und sind beispielsweise aus der CN108484211 oder der CN108529940 bekannt. Die DE4209897 und DE3909083 beschreiben Gips-basierten Schaummörtel. Die GB20047636 befasst sich mit Silicatschäumen. Die DE2056255 offenbart Schaummittel für Gips- und Zementmassen. Die DE4009967 lehrt den Einsatz von Porenbildnern in Mörtel, wobei die Porenbildner mit einer inaktivierenden Beschichtung versehen sind, so dass die porenbildende Wirkung der Porenbildner im Frischbeton zeitverzögert erfolgt. WO 2009/127484 A1 offenbart eine Fliesenkleberzusammensetzung in der ein hydraulisch abbindender Zement mit einem kommerziell erhältlichen Dispersionspulver unter Verwendung eines Treibmittels geschäumt wird.

Ein Gegenstand der Erfindung ist die Verwendung von Schaummörtel als Klebemittel für Bodenbeläge gemäß Anspruch 1.

Ein weiterer Gegenstand der Erfindung sind Verfahren zum Verlegen von Bodenbelägen gemäß Anspruch 12.

Schaummörtel basieren vorzugsweise auf einem oder mehreren Schaumstabilisatoren, Zement, einem oder mehreren Schutzkolloid stabilisierten Polymeren von ethylenisch ungesättigten Monomeren in Form von wässrigen Dispersionen oder in Wasser redispergierbaren Pulvern, einem oder mehreren Luftporenbildnern und gegebenenfalls einem oder mehreren Additiven.

Schaummörtel sind beispielsweise erhältlich, indem Luftporen mittels einem oder mehreren Luftporenbildnern und gegebenenfalls durch Eintragen von Luft in wässrige Mörtel eingebracht werden.

Das Eintragen von Luft in wässrige Mörtel kann beispielweise durch mechanisches Mischen der wässrigen Mörtel mit Luft erfolgen. Hierzu können die wässrigen Mörtel beispielsweise aufgeschlagen und Luft untergemischt werden. Das mechanische Mischen erfolgt vorzugsweise mittels Rührblättern, Mischwendeln, Paddel-, Propeller- oder Lochblech-Rührern. Besonders bevorzugt sind Mischwendel mit Lochblech. Es können auch Schaumgeneratoren Einsatz finden. Schaumgeneratoren sind kommerziell verfügbare Maschinen zum Generieren von Schaum. Es kann auch Luft in die wässrigen Mörtel eingeblasen werden. Die Luft hat vorzugsweise eine Temperatur von 5°C bis 35°C, insbesondere Umgebungstemperatur.

Als Luftporenbildner erfindungsgemäß sind Ammonium- oder Alkalisalze der Hydrogencarbonate oder Carbonate, insbesondere deren Ammonium- oder Natrium- oder Kaliumsalze. Besonders bevorzugt sind Hydrogencarbonate. Am meisten bevorzugt ist Natriumhydrogencarbonat. Vorzugsweise umfassen die Luftporenbildner kein Erdalkalicarbonat. Luftporenbildner haben eine Körnung von vorzugsweise 10 µm bis 1 mm, besonders bevorzugt von 100 µm bis 800 µm und am meisten bevorzugt 200 µm bis 700 um.

Die Schaummörtel basieren zu vorzugsweise 0,01 bis 10 Gew.-%, besonders bevorzugt 0,05 bis 5 Gew.-% und am meisten bevorzugt 0,1 bis 3 Gew.-% auf Luftporenbildnern, bezogen auf das Trockengewicht der Schaummörtel.

Es können beispielsweise Tensid-, Polymer-, Protein- oder Enzym-basierte Schaumstabilisatoren Einsatz finden.

Beispiele für Tenside als Schaumstabilisatoren sind Olefinsulfonsäuren; Fettsäuren, mit vorzugsweise 16 bis 18 C-Atomen, oder deren Salze; Fettalkohole, mit vorzugsweise 10 bis 18 C-Atomen; Alkylphenole oder Hydroxyalkylphenole mit vorzugsweise Alkylketten mit 10 bis 18 C-Atomen; Alkyl- und Alkylarylethersulfate mit vorzugsweise 8 bis 18 C-Atomen im hydrophoben Rest und vorzugsweise 1 bis 50 Ethylenoxideinheiten; Sulfonate, insbesondere Alkylsulfonate mit vorzugsweise 8 bis 18 C-Atomen, Alkylarylsulfonate, vorzugsweise mit Alkylresten mit 8 bis 18 C-Atomen, Ester oder Halbester der Sulfobernsteinsäure mit vorzugsweise einwertigen Alkoholen oder Alkylphenolen mit vorzugsweise 4 bis 15 C-Atomen im Alkylrest, wobei diese Alkohole oder Alkylphenole auch mit 1 bis 40 Ethylenoxideinheiten ethoxyliert sein können; Phosphorsäureteilester, insbesondere Alkyl- oder Alkylarylphosphate mit 8 bis 20 C-Atomen im organischen Rest, Alkylether- und Alkylaryletherphosphate mit 8 bis 20 C-Atomen im Alkyl bzw. Alkylarylrest und 1 bis 50 EO-Einheiten; Alkylpolyglykolether bevorzugt mit 8 bis 40 EO-Einheiten und Alkylresten mit 8 bis 20 C-Atomen; Alkylarylpolyglykolether bevorzugt mit 8 bis 40 EO-Einheiten und 8 bis 20 C-Atomen in den Alkyl-und Arylresten; Ethylenoxid/Propylenoxid (EO/ PO)-Blockcopolymere bevorzugt mit 8 bis 40 EO- bzw. PO-Einheiten; N-Methyltauride vorzugsweise von höheren Fettsäuren, mit vorzugsweise 10 bis 18 C-Atomen; Fettsäurealkylolamide, wie Mono- oder Diaethanolamide von Fettsäuren; Aminoxide oder Phosphinoxide, wie Cocosdimethylaminoxid oder Cocosdimethylphosphinoxid der allgemeinen Formel R-N(CH₃)₂=0 oder R-P(CH₃)₂=0; Ampholyte, wie Cocosfettsäure-Dimethylamino-Essigsaures Natrium oder Sulfobetain; Phosphorsäureester insbesondere von langkettigen Alkoholen, mit vorzugsweise 10 bis 18 C-Atomen oder von mit 1 bis 4 Mol Ethylenoxid oxyethylierten Alkoholen mit 8 bis 10 C-Atomen im Molekül.

Bevorzugte Tenside sind hierbei Olefinsulfonsäuren, Fettsäuren, Fettalkohole, Alkyl- und Alkylarylethersulfate und Sulfonate.

Eine EO-Einheit steht für eine Ethylenoxideinheit und eine PO-Einheit für eine Propylenoxideinheit. Die vorgenannten Säuren können auch in Form ihrer Salze vorliegen, insbesondere Ammonium- oder (Erd)Alkalisalze. Olefinsulfonsäuren enthalten vorzugsweise 10 bis 20 Kohlenstoffatome. Die Olefinsulfonsäuren tragen vorzugsweise ein oder zwei Sulfonsäure- oder Hydroxyalkylsulfonäure-Gruppen. Hierbei sind α-Olefinsulfonsäuren bevorzugt.

Beispiele für Polymere als Schaumstabilisatoren sind Polyvinylalkohole; Polyvinylacetale; Polyvinylpyrrolidone; Polysaccharide in wasserlöslicher Form, wie Stärken (Amylose und Amylopectin), Cellulosen und deren Derivate, wie Carboxymethyl-, Methyl-, Hydroxyethyl-, Hydroxypropyl-Derivate, Dextrine und Cyclodextrine; Ligninsulfonate; Poly(meth)acrylsäure; Copolymerisate von (Meth)acrylaten mit carboxylfunktionellen Comonomereinheiten; Poly(meth)acrylamid; Polyvinylsulfonsäuren und deren wasserlöslichen Copolymere; Melaminformaldehydsulfonate; Naphthalinformaldehydsulfonate; Styrolmaleinsäure-Copolymere und Vinylethermaleinsäure-Copolymere.

Beispiele für Proteine als Schaumstabilisatoren sind Kasein, Kaseinat, Sojaprotein oder Gelatine. Proteine sind beispielsweise erhältlich durch Proteinhydrolyse, insbesondere tierischer Proteine, beispielsweise aus Horn, Blut, Knochen und ähnlichen Abfällen von Rindern, Schweinen und sonstigen Tierkadavern. Enzyme als Schaumstabilisatoren können beispielsweise biotechnologischen Ursprungs sein.

Bevorzugte Schaumstabilisatoren sind Tenside; Polyvinylalkohole; Polyvinylpyrrolidone; Cellulosen und deren Derivate, wie Carboxymethyl-, Methyl-, Hydroxyethyl-, Hydroxypropyl-Derivate; Proteine wie Kasein oder Kaseinat, Sojaprotein und Gelatine. Besonders bevorzugte Schaumstabilisatoren sind Tenside, insbesondere Olefinsulfonsäuren.

Besonders bevorzugt ist der gemeinsame Einsatz von Tensid-Schaumstabilisatoren und Polymer-Schaumstabilisatoren.

Die Schaumstabilisatoren haben Molekulargewichte von vorzugsweise ≤ 4000 g/mol, mehr bevorzugt ≤ 3000 g/mol, noch mehr bevorzugt ≤ 2500 g/mol, besonders bevorzugt ≤ 1500 g/mol und am meisten bevorzugt ≤ 1000 g/mol.

Die Schaumstabilisatoren und die Schutzkolloid stabilisierten Polymere liegen im Allgemeinen nebeneinander vor. Die Schaumstabilisatoren sind allgemein nicht Bestandteil der Schutzkolloid stabilisierten Polymere.

Die Schaummörtel basieren zu vorzugsweise 0,01 bis 35 Gew.-%, besonders bevorzugt 0,05 bis 20 Gew.-% und am meisten bevorzugt 0,1 bis 10 Gew.-% auf Schaumstabilisatoren. Tenside oder Polymere als Schaumstabilisatoren sind zu vorzugsweise 0,01 bis 10 Gew.-%, besonders bevorzugt 0,05 bis 5 Gew.-% und am meisten bevorzugt 0,1 bis 3 Gew.-% enthalten. Proteine oder Enzyme als Schaumstabilisatoren sind zu vorzugsweise 10 bis 35 Gew.-%, besonders bevorzugt 15 bis 30 Gew.-% und am meisten bevorzugt 20 bis 25 Gew.-% enthalten. Die Angaben in Gew.-% beziehen sich hierbei auf Trockengewicht der Schaummörtel.

Die Schaummörtel basieren zu vorzugsweise 0,5 bis 40 Gew.-%, besonders bevorzugt 5 bis 30 Gew.-% und am meisten bevorzugt 10 bis 20 Gew.-% auf Schutzkolloid stabilisierten Polymeren von ethylenisch ungesättigten Monomeren, bezogen auf das Trockengewicht der Schaummörtel.

Die Polymere von ethylenisch ungesättigten Monomeren basieren beispielsweise auf einem oder mehreren Monomeren ausgewählt aus der Gruppe umfassend Vinylester, (Meth)acrylsäureester, Vinylaromaten, Olefine, 1,3-Diene und Vinylhalogenide.

Geeignete Vinylester sind beispielsweise solche von Carbonsäuren mit 1 bis 15 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9R oder VeoVa10R (Handelsnamen der Firma Resolution). Besonders bevorzugt ist Vinylacetat.

Geeignete Monomere aus der Gruppe Acrylsäureester oder Methacrylsäureester sind beispielsweise Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen und Propylen, und die bevorzugten Diene sind 1,3-Butadien und Isopren.

Gegebenenfalls können noch 0 bis 10 Gew.-%, vorzugsweise 0,1 bis 5 Gew.-%, bezogen auf das Gesamtgewicht der Monomere, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid; ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Diallylphthalat, Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Bevorzugt werden Mischpolymerisate von Vinylacetat mit 1 bis 50 Gew.-% Ethylen; Mischpolymerisate von Vinylacetat mit 1 bis 50 Gew.-% Ethylen und 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 13 C-Atomen wie VeoVa9, VeoVa10, VeoVa11; Mischpolymerisate von Vinylacetat, 1 bis 50 Gew.-% Ethylen und vorzugsweise 1 bis 60 Gew.-% (Meth)Acrylsäureester von unverzweigten oder verzweigten Alkoholen mit 1 bis 15 C-Atomen, insbesonders n-Butylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten; Mischpolymerisate mit Vinylacetat, 1 bis 50 Gew.-% Ethylen und 1 bis 60 Gew.-% Vinylchlorid; wobei die Polymerisate noch die genannten Hilfsmonomere in den genannten Mengen enthalten können, und sich die Angaben in Gew.-% auf jeweils 100 Gew.-% aufaddieren.

Bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat; Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat; Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen; Styrol-1,3-Butadien-Copolymerisate; wobei die Polymerisate noch die genannten Hilfsmonomere in den genannten Mengen enthalten können, und sich die Angaben in Gew.-% auf jeweils 100 Gew.-% aufaddieren.

Am meisten bevorzugt werden Mischpolymerisate mit Vinylacetat und 5 bis 50 Gew.-% Ethylen; oder Mischpolymerisate mit Vinylacetat, 1 bis 50 Gew.-% Ethylen und 1 bis 50 Gew.-% von einem Vinylester von α-verzweigten Monocarbonsäuren mit 9 bis 11 C-Atomen; oder Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, welche noch 1 bis 40 Gew.-% Ethylen enthalten; oder Mischpolymerisate mit Vinylacetat, 5 bis 50 Gew.-% Ethylen und 1 bis 60 Gew.-% Vinylchlorid.

Die Monomerauswahl bzw. die Auswahl der Gewichtsanteile der Comonomere erfolgt dabei so, dass eine Glasübergangstemperatur Tg von -25°C bis +35°C, vorzugsweise -10°C bis +25°C, besonders bevorzugt -10°C bis +20°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Polymerisate erfolgt allgemein in wässrigem Medium und bevorzugt nach dem Emulsions- oder Suspensionspolymerisationsverfahren - wie beispielsweise in DE-A 102008043988 beschrieben. Bei der Polymerisation können die gängigen Schutzkolloide und/oder Emulgatoren eingesetzt werden, wie in der DE-A 102008043988 beschrieben. Die Polymerisate in Form von wässrigen Dispersionen können wie in der DE-A 102008043988 beschrieben in entsprechende in Wasser redispergierbare Pulver überführt werden. Dabei wird in der Regel eine Trocknungshilfe eingesetzt, vorzugsweise die vorgenannten Polyvinylalkohole.

Die Polymere können beispielsweise in Form von wässrigen Dispersionen, insbesondere Schutzkolloid stabilisierten wässrigen Dispersionen vorliegen. Bevorzugte Schutzkolloide sind Polyvinylalkohole, wie teilverseifte oder vollverseifte Polyvinylalkohole, insbesondere mit einem Hydrolysegrad von 80 bis 100 Mol-%. Besonders bevorzugt sind teilverseifte Polyvinylalkohole mit einem Hydrolysegrad von 80 bis 94 Mol-% und einer Höpplerviskosität, in 4 %-iger wässriger Lösung von insbesondere 1 bis 30 mPas (Methode nach Höppler bei 20°C, DIN 53015). Die genannten Schutzkolloide sind mittels dem Fachmann bekannter Verfahren zugänglich. Die Schutzkolloide sind im Allgemeinen in einer Menge von insgesamt 1 bis 20 Gew.-%, bezogen auf das Gesamtgewicht Polymere, enthalten.

Die Polymere liegen vorzugsweise in Form von Schutzkolloid stabilisierten, in Wasser redispergierbaren Pulvern vor. Dispergieren der Schutzkolloid stabilisierten, in Wasser redispergierbaren Polymerepulver führt zur Schutzkolloid stabilisierten Polymeren in Form von wässrigen Redispersionen. Die Pulver enthalten vorzugsweise 3 bis 30 Gew.-%, besonders bevorzugt 5 bis 20 Gew.-% Polyvinylalkohole, insbesondere die vorgenannten Polyvinylalkohole, bezogen auf das Trockengewicht der Pulver.

Die Schutzkolloid stabilisierten Polymere liegen im Allgemeinen separat von den Luftporenbildnern und/oder Schaumstabilisatoren vor. Die Luftporenbildner und/oder Schaumstabilisatoren sind im Allgemeinen nicht mit den Schutzkolloid stabilisierten Polymere beschichtet. Die Schutzkolloid stabilisierten Polymere beziehungsweise die Schutzkolloide oder die Polymere der Schutzkolloid stabilisierten Polymere sind allgemein von den Schaumstabilisatoren und etwaigen Verdickungsmitteln verschieden.

Bei Zement kann es sich beispielsweise um Portlandzement (CEM I), Portlandhüttenzement (CEM II), Hochofenzement (CEM III), Puzzolanzement (CEM IV), Kompositzement (CEM V), Portlandsilicatstaubzement, Portlandschieferzement, Portlandkalksteinzement, Trasszement, Magnesiazement, Phosphatzement, Mischzemente oder Füllzemente oder schnellabbindenden Zement handeln. Beispiele für schnellabbindenden Zement sind Aluminatzement, Calciumsulfoaluminatzementen und Hochtonerdezemenent. Bevorzugt sind Portlandzement CEM I, Portlandhüttenzement CEM II/A-S, CEM II/B-S, Portlandkalksteinzement CEM II/A-LL, Portlandflugaschezement CEM II/A-V, Portlandflugaschehüttenzement CEM II/B-SV oder Hochofenzement CEM III/A, CEM III/B, CEM III/B und Aluminatzement.

Auf Zement basieren die Schaummörtel zu vorzugsweise 40 bis 95 Gew.-%, mehr bevorzugt 50 bis 92 Gew.-%, besonders bevorzugt 60 bis 91 Gew.-% und am meisten bevorzugt 70 bis 90 Gew.-%, bezogen auf das Trockengewicht der Schaummörtel.

In einer bevorzugten Ausführungsform enthalten die Schaummörtel schnellabbindenden Zement, wie Aluminatzement, und zudem ein oder mehrere von schnellabbindendem Zement verschiedene Zemente, insbesondere Portlandzemente. Schnellabbindender Zement ist besonders vorteilhaft zur Lösung der erfindungsgemäßen Aufgabe.

Die Schaummörtel basieren zu vorzugsweise 1 bis 30 Gew.-%, besonders bevorzugt 5 bis 20 Gew.-% und am meisten bevorzugt 10 bis 15 Gew.-% auf schnellabbindenden Zement, bezogen auf das Trockengewicht der Schaummörtel. Die Schaummörtel basieren zu vorzugsweise 1 bis 40 Gew.-%, besonders bevorzugt 5 bis 30 Gew.-% und am meisten bevorzugt 10 bis 20 Gew.-% auf schnellabbindenden Zement, bezogen auf das Gesamtgewicht des insgesamt eingesetzten Zements.

Die Schaummörtel können auch ein oder mehrere Verdickungsmittel enthalten, beispielsweise Polysaccharide wie Celluloseether und modifizierte Celluloseether, Celluloseester, Stärkeether, Guar Gum, Xanthan Gum, Polycarbonsäuren wie Polyacrylsäure und deren Teilester, Casein und assoziativ wirkende Verdicker. Bevorzugte Celluloseether sind Methylcelluloseether. Die Verdickungsmittel sind allgemein von den Schaumstabilisatoren verschieden. Die Verdickungsmittel haben Molekulargewichte von vorzugsweise > 4000 g/mol, besonders bevorzugt ≥ 10000 g/mol und am meisten bevorzugt ≥ 20000 g/mol. Die Schaummörtel basieren zu vorzugsweise ≤ 5 Gew.-%, besonders bevorzugt 0,1 bis 3 Gew.-% und am meisten bevorzugt 0,5 bis 1,5 Gew.-% auf Verdickungsmittel, bezogen auf das Trockengewicht der Schaummörtel.

Zudem können die Schaummörtel auch Abbindebeschleuniger enthalten, wie Aluminiumverbindungen, Silikate, (Erd)Alkalihydroxide, Nitrate, Nitrite, Sulfate, Borate oder von Carbonsäuren. Bevorzugte Abbindebeschleuniger sind Aluminiumsalze, Aluminate, Alkalisilikate, wie Wasserglas, Alkaliformiate, Kaliumhydroxid oder Calciumhydroxid (Ca(OH)₂).

Die Schaummörtel basieren zu vorzugsweise 0,1 bis 5 Gew.-%, besonders bevorzugt 0,2 bis 2 Gew.-% und am meisten bevorzugt 0,3 bis 1 Gew.-% auf Abbindebeschleunigern, bezogen auf das Trockengewicht der Schaummörtel.

Die Schaummörtel können auch ein oder mehrere Puzzolane enthalten, wie beispielsweise Kaolin, Mikrosilica, Diatomeenerde, Flugasche, Trassmehl, gemahlene Hochofenschlacke, Glasmehl, gefällte Kieselsäure und pyrogene Kieselsäure. Bevorzugte Puzzolane sind Kaolin, Mikrosilica, Flugasche, gemahlene Hochofenschlacke, insbesondere Metakaolin. Die Schaummörtel basieren zu beispielsweise 0 bis 10 Gew.-%, vorzugsweise 0,5 bis 5 Gew.-% auf Puzzolanen, bezogen auf das Trockengewicht der Schaummörtel. Am meisten bevorzugt enthalten die Schaummörtel keine Puzzolane.

Vorzugsweise basieren die Schaummörtel zu ≤ 30 Gew.-%, mehr bevorzugt ≤ 20 Gew.-%, mehr bevorzugt ≤ 10 Gew.-% und besonders bevorzugt ≤ 5 Gew.-% auf Gips, bezogen auf das Trockengewicht der Komponenten zur Herstellung der Schaummörtel. Am meisten bevorzugt enthalten die Schaummörtel keinen Gips. Verzicht auf Gips führt zu einer Verbesserung der Wasserbeständigkeit des abgebundenen Schaummörtels. Beispielhafte Ausführungsformen von Gips sind α- oder β-Halbhydrat (CaSO₄·1/2 H₂O), Dihydrat, Anhydrit oder das bei der Rauchgasentschwefelung anfallende Calciumsulfat (REA-Gips).

2. Erfindgsgemäß enthalten die Schaummörtel keine Füllstoffe.

Gegebenenfalls können die Schaummörtel noch Additive enthalten, beispielsweise Verflüssiger, Fließmittel, Verzögerer, Filmbildehilfsmittel, Dispergiermittel, Verflüssiger, Hydrophobierungsmittel, Pigmente, Weichmacher, Konservierungsmittel, Flammschutzmittel (z.B. Aluminiumhydroxid), disperse Kieselsäure. Bevorzugte Additive sind Fließmittel und Verflüssiger. Additive sind zu vorzugsweise 0 bis 20 Gew.-%, besonders bevorzugt 0,1 bis 10 Gew.-% und am meisten bevorzugt 0,5 bis 7 Gew.-% enthalten, bezogen auf das Trockengewicht der Schaummörtel.

Vorzugsweise enthalten die Schaummörtel keine Hexafluorkieselsäure, insbesondere keine Salze der Hexafluorkieselsäure, wie Calcium-, Magnesium-, Zink- oder Ammonium-Salze.

Zur Herstellung der wässrigen Schaummörtel werden vorzugsweise 4 bis 30 Gew.-%, besonders bevorzugt 6 bis 20 Gew.-% und am meisten bevorzugt 8 bis 15 Gew.-% Wasser eingesetzt, bezogen auf das Trockengewicht der Schaummörtel.

Zur Herstellung der wässrigen Schaummörtel können deren einzelnen Bestandteile in gängigen Mischvorrichtungen gemischt werden, beispielsweise mit Mörtelmischaggregaten, Bohrmaschinenrührwerken, Dissolvern oder Rührern mit Mischwendel, insbesondere bei hoher Umdrehungszahl des Rühr- oder Misch-Aggregates, vorzugsweise > 150 UpM, mehr bevorzugt von 150 bis 1000 UpM. Hierbei werden im Allgemeinen Luftporen in den Schaummörtel eingebracht, beispielsweise mittels Luftporenbildnern und/oder durch Eintragen von Luft, wie weiter oben bereits beschrieben.

Bei den Schaummörteln handelt es sich vorzugsweise um 1K-Systeme; das heißt, vorzugsweise werden sämtliche Bestandteile der Schaummörtel in einer Mischvorrichtung gemischt. Besonders bevorzugt werden zuerst Schaummörtel in Form von Trockenmischungen hergestellt, und anschließend wird Wasser zugegeben.

Auf Zugabe von Wasser werden die Schaummörtel für vorzugsweise 1 bis 10 Minuten, besonders bevorzugt 2 bis 5 Minuten gemischt. Das Mischen erfolgt vorzugsweise bei 5 bis 35°C, besonders bevorzugt 15 bis 25°C.

Der Schaummörtel enthält allgemein Luftporen. Der Schaummörtel hat vorzugsweise eine Sahne-ähnliche oder cremige Konsistenz. Der Schaummörtel hat eine Dichte von vorzugsweise 0,1 bis 1 g/cm³, besonders bevorzugt 0,2 bis 0,9 g/cm³ und am meisten bevorzugt 0,5 bis 0,8 g/cm³. Die Bestimmung der Dichte kann auf herkömmliche Weise erfolgen, beispielsweise durch Befüllen eines Behälters mit einem definierten Volumen des Schaums sowie Auswiegen.

Im Allgemeinen werden die so erhaltenen Schaummörtel unmittelbar nach ihrer Herstellung appliziert, insbesondere ohne einen weiteren Verarbeitungsschritt.

Die Schaummörtel werden als Klebemittel für Bodenbeläge eingesetzt. Mit dem Schaummörtel werden allgemein Bodenbeläge auf Untergründe verklebt. Die Bodenbeläge werden insbesondere auf horizontalen Flächen oder Flächen mit geringem Gefälle verlegt. Das Applizieren der Schaummörtel kann an sich wie beim Einsatz herkömmlicher Baukleber erfolgen. So können die wässrigen Schaummörtel maschinell, beispielsweise mit einem Sprühgerät, oder vorzugsweise manuell auf einen Untergrund aufgetragen, beispielsweise mit einer Spachtel, und verteilt werden, beispielsweise mit einer Zahnspachtel. Auf die so aufgebrachte Schaummörtelschicht kann dann der Bodenbelag gelegt und mit dem Untergrund verklebt werden.

Die auf den Untergrund applizierte Schaummörtelschicht hat eine Dicke von vorzugsweise 0,5 bis 8 mm, insbesondere 2 bis 4 mm.

Nach Aushärten der Schaummörtelschicht können etwaige Fugen beispielsweise mit herkömmlichem Fugenfüller verfüllt werden.

Mit dem Schaummörtel lassen sich herkömmliche Bodenbeläge auf den gängigen Untergründen verlegen. Beispiele für Untergründe sind Porenbeton, Beton, Putz oder Bodenspachtelmassen. Beispiele für Bodenbeläge sind Naturstein-, Keramik- oder Kunststoff-Bodenbeläge, insbesondere in Form von Fliesen, wie Vinylfliesen, vorzugsweise Keramik-, Naturstein- oder Glasfliesen, beispielsweise für den Außenbereich oder insbesondere den Innenbereich. Besonders bevorzugte Fliesen sind Steingut-, Steinzeug-, Feinststeinzeug-, Keramik- oder Naturfliesen, insbesondere großformatige Fliesen.

Der abgebundene Schaummörtel hat nach 28 Tagen im Normklima (23°C, 50% relative Luftfeuchtigkeit) eine Trockenrohdichte von vorzugsweise 10 bis 1000 kg/m³, besonders bevorzugt 100 bis 800 kg/m³ (Bestimmungsmethode: angelehnt an EN 1015-6).

Der Schaummörtel (Festmörtel) hat nach 28 Tagen im Normklima (23°C, 50% relative Luftfeuchtigkeit) eine Wärmeleitfähigkeit von vorzugsweise 50 bis 200 mW/mK, besonders bevorzugt 30 bis 100 mW/mK. Die Bestimmung der Wärmeleitfähigkeit erfolgt mit dem Wärmeleitfähigkeitsmessgerät HFM 436 der Firma Netzsch nach DIN EN 13163. Die Messung wird mit der Einstellung "Lamda 10°C" durchgeführt, die untere Platte wird auf 2,5°C und die obere Platte auf 17,5°C eingestellt. Das Testsubstrat wird mittig eingeklemmt und die Messung läuft, bis das Testsubstrat eine Kerntemperatur von 10°C erreicht hat.

Durch den erfindungsgemäßen Einsatz von Schaummörtel als Klebemittel zum Verlegen von Bodenbelägen lassen sich im Vergleich zu entsprechendem Einsatz von herkömmlichen Klebemitteln erhebliche Mengen an Klebemitteln einsparen, beispielsweise 70%. Dies ist ein erheblicher ökologischer und ökonomischer Vorteil und reduziert auch den Aufwand, Baukleber zur Baustelle zu transportieren und dort zu verarbeiten, und steigert also insgesamt die Produktivität erheblich. Vorteilhafterweise sind die Schaummörtel auf einfache Weise zugänglich und lassen sich wie herkömmliche Klebemörtel zum Verlegen von Bodenbelägen verarbeiten.

Überraschenderweise haben die erfindungsgemäß verlegten Böden überraschend gute mechanische Eigenschaften, insbesondere Haftzugfestigkeiten. So erfüllen erfindungsgemäß verlegte Fliesen auch die C1-Norm gemäß DIN 12004 und erreichen also Haftzugfestigkeiten von zumindest 0,5 N/mm², nach Trockenlagerung oder auch nach Nasslagerung.

Darüber hinaus zeigen die erfindungsgemäßen Schaummörtel auch vorteilhafte Frischmörteleigenschaften und haben beispielsweise eine cremige Konsistenz, was der Anwender beim Applizieren der Klebemittel aus ergonomischen Gründen sehr schätzt. Die offene Zeit des Schaummörtels ist hinreichend, um verlegte Bodenbeläge noch zu korrigieren.

Die folgenden Beispiele dienen der detaillierten Erläuterung der Erfindung und sind in keiner Weise als Einschränkung zu verstehen.

### Herstellung eines Schaummörtels als Fliesenkleber:

Zu einer Trockenmischung aus den in Tabelle 1 aufgeführten Komponenten wurde die in Tabelle 1 angegebene Menge an Wasser gegeben und nach dreiminütigem Rühren mit einem Toni-Mischer (Stufe 2) der gebrauchsfertige Schaummörtel mit Sahne-artiger Konsistenz erhalten.

Der so erhaltene Schaummörtel wurde als Fliesenkleber verwendet. Die Fliesenverlegung erfolgte, indem der Schaummörtel mit einer Zahnspachtel (Auftrag 6X6X6 Zahnspachtel, Schichtdicke: ca. 4 mm) auf einer Betonplatte verteilt wurde. In das Schaummörtelbett wurden Glasfliesen (Maße 40 cm × 40 cm) mit einer Fugenbreite von 6 mm eingelegt.

**Tabelle 1: Fliesenkleber-Rezeptur von Beispiel 1:**

| | Beispiel 1 [Gew.-T] |
|---|---|
| Polymerpulver | 80 |
| Tylose MH 60010 P4 | 3,5 |
| Hostapur OSB | 2 |
| Natriumhydrogencarbonat | 2 |
| Milke CEM I 52,5R | 324,7 |
| Fondu Lafarge | 60 |
| Walhalla Edelkalkhydrat | 25 |
| Natriumcarbonat | 2 |
| Weinsäure (Merck) | 0,8 |
| | |
| Wasser | 65 |
| | |

Zu den Komponenten der Fliesenkleber-Rezeptur:
- Polymerpulver:
   Polyvinylalkohol-stabilisiertes, in Wasser redispergierbares Polymerpulver eines Vinylacetat-Ethylen-Copolymers mit einer Glasübergangstemperatur von 16°C;
- Tylose MH 60010 P4 (Handelsname der Shin Etsu):
   veretherte Methylhydroxyethylcellulose (Verdickungsmittel);
- Hostapur OSB (Handelsname der Shin Etsu):
   Natriumsalz einer C14/C16-α-Olefinsulfonsäure;
- Milke CEM I 52,5R: Portlandzement;
- Fondu Lafarge (Handelsname der Imerys):
   Calciumoaluminatzement (schnellabbindender Zement);
- Walhalla Edelhydrat:
   Calciumhydroxid (Ca(OH)₂) (latent hydraulisches Bindemittel).

### Austestung des Fliesenverbundes aus Beispiel 1:

Die Bestimmung der Nassdichte des Schaummörtels erfolgte mittels einem Dichtemessbecher.

Die offene Zeit wurde nach 5, 20 sowie 30 Minuten gemäß EN1348 bestimmt.

Die Bestimmung der Haftzugfestigkeit erfolgte nach den in Tabelle 2 angegebenen Lagerbedingungen gemäß EN1348.

Die Austestungsergebnisse sind in Tabelle 2 zusammengefasst.

**Tabelle 2: Austestungsergebnisse mit dem Schaummörtel und dem Fliesenverbund des Beispiels 1:**

| | | Beispiel 1 |
|---|---|---|
| Nassdichte [g/cm³] | | 0,66 |

| offene Zeit [N/mm²]: | | |
|---|---|---|
| | 5 min | 0,54 |
| | 20 min | 0,94 |
| | 30 min | 1,21 |

| Haftzugfestigkeit [N/mm² ] : | | |
|---|---|---|
| | 28dNK^{a)} | 1,02 |
| | 7dNK/21dN^{b)} | 0,62 |
| | 14dNK/14dTS^{c)} | 1,04 |
| | 7dNK/21dN/25*Frost-Tau^{d)} | 0,69 |

| | | |
|---|---|---|
| a) 28dNK: Austestung nach 28 Tagen Normklimalagerung; b) 7dNK/21dN: Austestung nach 7 Tagen Normklimalagerung und 21 Tagen Nasslagerung (bei 23°C in Wasser); c) 14dNK/14dTS: Austestung nach 14 Tagen Normklimalagerung und 14 Tagen Trockenlagerung bei 70°C; d) 7dNK/21dN/25*Frost-Tau: Austestung nach 7 Tagen Normklimalagerung, 21 Tagen Nasslagerung (bei 23°C in Wasser) und 25 Tagen Frost-Tau-Lagerung. | | |

## Patentansprüche

1. Verwendung von Schaummörtel als Klebemittel für Bodenbeläge, wobei der Schaummörtel Schutzkolloid-stabilisierte Polymere von ethylenisch ungesättigten Monomeren und ein oder mehrere Luftporenbildner ausgewählt aus der Gruppe umfassend Ammonium- und Alkalisalze der Hydrogencarbonate und Carbonate enthält, mit der Maßgabe, dass der Schaummörtel keine Füllstoffe enthält.

2. Verwendung von Schaummörtel als Klebemittel für Bodenbeläge nach Anspruch 1, **dadurch gekennzeichnet, dass** die Schaummörtel auf einem oder mehreren Schaumstabilisatoren, Zement, einem oder mehreren Schutzkolloid stabilisierten Polymeren von ethylenisch ungesättigten Monomeren in Form von wässrigen Dispersionen oder in Wasser redispergierbaren Pulvern, einem oder mehreren Luftporenbildnern und gegebenenfalls einem oder mehreren Additiven basieren.

3. Verwendung von Schaummörtel als Klebemittel für Bodenbeläge nach Anspruch 1 oder 2, **dadurch gekennzeichnet, dass** die Schaummörtel als Luftporenbildner Natriumhydrogencarbonat enthalten.

4. Verwendung von Schaummörtel als Klebemittel für Bodenbeläge nach Anspruch 2 oder 3, **dadurch gekennzeichnet, dass** als Schaumstabilisatoren
ein oder mehrere Tenside ausgewählt werden aus der Gruppe umfassend Olefinsulfonsäuren; Fettsäuren oder deren Salze; Fettalkohole; Alkylphenole oder Hydroxyalkylphenole; Alkyl- und Alkylarylethersulfate; Alkylsulfonate, Alkylarylsulfonate; Ester oder Halbester der Sulfobernsteinsäure; Phosphorsäureteilester; Alkylpolyglykolether; Alkylarylpolyglykolether; Ethylenoxid/Propylenoxid (EO/PO)-Blockcopolymere; N-Methyltauride; Fettsäurealkylolamide; Aminoxide; oder Phosphinoxide; Cocosfettsäure-Dimethylamino-Essigsaures Natrium; Sulfobetain und Phosphorsäureester; und/oder
ein oder mehrere Polymere ausgewählt werden aus der Gruppe umfassend Polyvinylalkohole; Polyvinylacetale;
Polyvinylpyrrolidone; Polysaccharide in wasserlöslicher Form; Ligninsulfonate; Poly(meth)acrylsäure; Copolymerisate von (Meth)acrylaten mit carboxylfunktionellen Comonomereinheiten; Poly(meth)acrylamid; Polyvinylsulfonsäuren und deren wasserlöslichen Copolymere; Melaminformaldehydsulfonate; Naphthalinformaldehydsulfonate; Styrolmaleinsäure-Copolymere; und Vinylethermaleinsäure-Copolymere; und/oder
ein oder mehrere Proteine ausgewählt werden aus der Gruppe umfassend Kasein, Kaseinat, Sojaprotein; Gelatine; und sonstige Proteine erhältlich durch Proteinhydrolyse tierischer Proteine; und/oder
Enzyme biotechnologischen Ursprungs enthalten sind.

5. Verwendung von Schaummörtel als Klebemittel für Bodenbeläge nach Anspruch 1 bis 3, **dadurch gekennzeichnet, dass** die Schaummörtel ein oder mehrere Schaumstabilisatoren enthalten ausgewählt aus der Gruppe umfassend Olefinsulfonsäuren; Fettsäuren mit 16 bis 18 C-Atomen oder deren Salze; Fettalkohole mit 10 bis 18 C-Atomen; Alkylphenole oder Hydroxyalkylphenole mit Alkylketten mit 10 bis 18 C-Atomen; Alkyl- und Alkylarylethersulfate mit 8 bis 18 C-Atomen im hydrophoben Rest und 1 bis 50 Ethylenoxideinheiten; Alkylsulfonate mit 8 bis 18 C-Atomen; Alkylarylsulfonate mit Alkylresten mit 8 bis 18 C-Atomen; und Ester oder Halbester der Sulfobernsteinsäure.

6. Verwendung von Schaummörtel als Klebemittel für Bodenbeläge nach Anspruch 1 bis 5, **dadurch gekennzeichnet, dass** die Schaummörtel zu 5 bis 40 Gew.-% auf Schutzkolloid stabilisierten Polymeren von ethylenisch ungesättigten Monomeren basieren, bezogen auf das Trockengewicht der Schaummörtel.

7. Verwendung von Schaummörtel als Klebemittel für Bodenbeläge nach Anspruch 1 bis 6, **dadurch gekennzeichnet, dass** die Polymere von ethylenisch ungesättigten Monomeren auf einem oder mehreren Monomeren ausgewählt aus der Gruppe umfassend Vinylester, (Meth)-acrylsäureester, Vinylaromaten, Olefine, 1,3-Diene und Vinylhalogenide basieren.

8. Verwendung von Schaummörtel als Klebemittel für Bodenbeläge nach Anspruch 1 bis 6, **dadurch gekennzeichnet, dass** als Polymere von ethylenisch ungesättigten Monomeren ein oder mehrere Mischpolymerisate ausgewählt werden aus der Gruppe umfassend Mischpolymerisate mit Vinylacetat und 5 bis 50 Gew.-% Ethylen; Mischpolymerisate mit Vinylacetat, 1 bis 50 Gew.-% Ethylen und 1 bis 50 Gew.-% von einem Vinylester von α-verzweigten Monocarbonsäuren mit 9 bis 11 C-Atomen; Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, welche noch 1 bis 40 Gew.-% Ethylen enthalten; und Mischpolymerisate mit Vinylacetat, 5 bis 50 Gew.-% Ethylen und 1 bis 60 Gew.-% Vinylchlorid.

9. Verwendung von Schaummörtel als Klebemittel für Bodenbeläge nach Anspruch 1 bis 8, **dadurch gekennzeichnet, dass** die Schaummörtel zu 1 bis 40 Gew.-% auf schnellabbindendem Zement basieren, bezogen auf das Gesamtgewicht des insgesamt enthaltenen Zements, wobei schnellabbindender Zement ausgewählt wird aus der Gruppe umfassend Aluminatzement, Calciumsulfoaluminatzementen und Hochtonerdezemenent.

10. Verwendung von Schaummörtel als Klebemittel für Bodenbeläge nach Anspruch 1 bis 9, **dadurch gekennzeichnet, dass** Bodenbeläge ausgewählt werden aus der Gruppe umfassend Naturstein-, Keramik-, Glas- und Vinyl-Bodenbeläge.

11. Verwendung von Schaummörtel als Klebemittel für Bodenbeläge nach Anspruch 1 bis 9, **dadurch gekennzeichnet, dass** Bodenbeläge ausgewählt werden aus der Gruppe umfassend Steingut-, Steinzeug-, Feinststeinzeug-, Keramik- und Naturfliesen.

12. Verfahren zum Verlegen von Bodenbelägen, in denen Bodenbeläge mit Schaummörtel als Klebemittel auf einen Untergrund verklebt werden, wobei der Schaummörtel Schutzkolloid-stabilisierte Polymere von ethylenisch ungesättigten Monomeren und ein oder mehrere Luftporenbildner ausgewählt aus der Gruppe umfassend Ammonium- und Alkalisalze der Hydrogencarbonate und Carbonate enthält,
mit der Maßgabe, dass der Schaummörtel keine Füllstoffe enthält.

## Claims

1. Use of foam mortar as bonding agent for floorings, said foam mortar comprising protective colloid-stabilized polymers of ethylenically unsaturated monomers and one or more air entrainers selected from the group encompassing ammonium salts and alkali metal salts of hydrogencarbonates and carbonates,
with the proviso that the foam mortar contains no fillers.

2. Use of foam mortar as bonding agent for floorings according to Claim 1, **characterized in that** the foam mortars are based on one or more foam stabilizers, cement, one or more protective colloid-stabilized polymers of ethylenically unsaturated monomers in the form of aqueous dispersions or water-redispersible powders, one or more air entrainers and optionally one or more additives.

3. Use of foam mortar as bonding agent for floorings according to Claim 1 or 2, **characterized in that** the foam mortars comprise sodium hydrogencarbonate as air entrainer.

4. Use of foam mortar as bonding agent for floorings according to Claim 2 or 3, **characterized in that** foam stabilizers selected are
one or more surfactants selected from the group encompassing olefinsulfonic acids; fatty acids or salts thereof; fatty alcohols; alkylphenols or hydroxyalkylphenols; alkyl and alkylaryl ether sulfates; alkylsulfonates, alkylarylsulfonates; esters or monoesters of sulfosuccinic acid; phosphoric acid partial esters; alkyl polyglycol ethers; alkylaryl polyglycol ethers; ethylene oxide/propylene oxide (EO/PO) block copolymers; N-methyltauride; fatty acid alkylolamides; amine oxides; or phosphine oxides; sodium cocoyl dimethylaminoacetate; sulfobetaine and phosphoric esters; and/or
one or more polymers selected from the group encompassing polyvinyl alcohols; polyvinyl acetals; polyvinylpyrrolidones; polysaccharides in water-soluble form; lignosulfonates; poly(meth)acrylic acid; copolymers of (meth)acrylates with carboxyl-functional comonomer units; poly(meth)acrylamide; polyvinylsulfonic acids and water-soluble copolymers thereof; melamine-formaldehydesulfonates; naphthalene-formaldehydesulfonates; styrene-maleic acid copolymers; and vinyl ether-maleic acid copolymers; and/or
one or more proteins selected from the group encompassing casein, caseinate, soy protein; gelatin; and other proteins obtainable by protein hydrolysis of animal proteins; and/or
enzymes of biotechnological origin.

5. Use of foam mortar as bonding agent for floorings according to Claim 1 to 3, **characterized in that** the foam mortars comprise one or more foam stabilizers selected from the group encompassing olefinsulfonic acids; fatty acids having 16 to 18 carbon atoms or salts thereof; fatty alcohols having 10 to 18 carbon atoms; alkylphenols or hydroxyalkylphenols having alkyl chains with 10 to 18 carbon atoms; alkyl and alkylaryl ether sulfates having 8 to 18 carbon atoms in the hydrophobic radical and 1 to 50 ethylene oxide units; alkylsulfonates having 8 to 18 carbon atoms; alkylarylsulfonates having alkyl radicals with 8 to 18 carbon atoms; and esters or monoesters of sulfosuccinic acid.

6. Use of foam mortar as bonding agent for floorings according to Claim 1 to 5, **characterized in that** the foam mortars are based on 5% to 40% by weight of protective colloid-stabilized polymers of ethylenically unsaturated monomers, relative to the dry weight of the foam mortars.

7. Use of foam mortar as bonding agent for floorings according to Claim 1 to 6, **characterized in that** the polymers of ethylenically unsaturated monomers are based on one or more monomers selected from the group encompassing vinyl esters, (meth)acrylic esters, vinylaromatics, olefins, 1,3-dienes and vinyl halides.

8. Use of foam mortar as bonding agent for floorings according to Claim 1 to 6, **characterized in that** polymers of ethylenically unsaturated monomers selected are one or more copolymers selected from the group encompassing copolymers with vinyl acetate and 5% to 50% by weight of ethylene; copolymers with vinyl acetate, 1% to 50% by weight of ethylene and 1% to 50% by weight of a vinyl ester of α-branched monocarboxylic acids having 9 to 11 carbon atoms; copolymers with 30% to 75% by weight of vinyl acetate, 1% to 30% by weight of vinyl laurate or vinyl esters of an alpha-branched carboxylic acid having 9 to 11 carbon atoms, and also 1% to 30% by weight of (meth)acrylic esters of unbranched or branched alcohols having 1 to 15 carbon atoms which additionally contain 1% to 40% by weight of ethylene; and copolymers with vinyl acetate, 5% to 50% by weight of ethylene and 1% to 60% by weight of vinyl chloride.

9. Use of foam mortar as bonding agent for floorings according to Claim 1 to 8, **characterized in that** the foam mortars are based to an extent of 1% to 40% by weight on rapid-setting cement, relative to the total weight of the cement comprised overall, said rapid-setting cement being selected from the group encompassing aluminate cement, calcium sulfoaluminate cements and high-alumina cement.

10. Use of foam mortar as bonding agent for floorings according to Claim 1 to 9, **characterized in that** floorings are selected from the group encompassing natural stone floorings, ceramic floorings, glass floorings and vinyl floorings.

11. Use of foam mortar as bonding agent for floorings according to Claim 1 to 9, **characterized in that** floorings are selected from the group encompassing earthenware tiles, stoneware tiles, porcelain stoneware tiles, ceramic tiles and natural tiles.

12. Method for laying floorings, in which floorings are bonded with foam mortar as bonding agent to a substrate, said foam mortar comprising protective colloid-stabilized polymers of ethylenically unsaturated monomers and one or more air entrainers selected from the group encompassing ammonium salts and alkali metal salts of hydrogencarbonates and carbonates,
with the proviso that the foam mortar contains no fillers.

## Revendications

1. Utilisation de mortier mousse en tant qu'adhésif pour des revêtements de sol, le mortier mousse contenant des polymères, stabilisés par un colloïde de protection, de monomères éthyléniquement insaturés et un ou plusieurs entraîneurs d'air choisis dans le groupe comprenant les sels d'ammonium et de métal alcalin des hydrogénocarbonates et des carbonates, étant entendu que le mortier mousse ne contient pas de charges.

2. Utilisation de mortiers mousses en tant qu'adhésif pour des revêtements de sol selon la revendication 1, **caractérisée en ce que** les mortiers mousses sont à base d'un ou de plusieurs stabilisants de mousse, de ciment, d'un ou de plusieurs polymères, stabilisés par un colloïde de protection, de monomères éthyléniquement insaturés sous forme de dispersions aqueuses ou de poudres redispersibles dans l'eau, d'un ou de plusieurs entraîneurs d'air et le cas échéant d'un ou de plusieurs additifs.

3. Utilisation de mortiers mousses en tant qu'adhésif pour des revêtements de sol selon la revendication 1 ou 2, **caractérisée en ce que** les mortiers mousses contiennent, comme entraîneur d'air, de l'hydrogénocarbonate de sodium.

4. Utilisation de mortiers mousses en tant qu'adhésif pour des revêtements de sol selon la revendication 2 ou 3, **caractérisée en ce qu'**ils contiennent, comme stabilisants de mousse,
- un ou plusieurs tensioactifs choisis dans le groupe comprenant les acides oléfinesulfoniques ; les acides gras ou leurs sels ; les alcools gras ; les alkylphénols ou les hydroxyalkylphénols ; les alkyléthersulfates et les alkylaryléthersulfates ; les alkylsulfonates, les alkylarylsulfonates ; les esters ou les semi-esters de l'acide sulfosuccinique ; les esters partiels de l'acide phosphorique ; les alkylpolyglycoléthers ; les alkylarylpolyglycoléthers ; les copolymères séquences d'oxyde d'éthylène/oxyde de propylène (OE/OP) ; les N-méthyltaurides ; les alkylolamides d'acides gras ; les oxydes d'amine ; ou les oxydes de phosphine ; l'acide gras de coco-diméthylamino-acide acétique sodique ; la sulfobétaïne et les esters de l'acide phosphorique ; et/ou
- un ou plusieurs polymères choisis dans le groupe comprenant les poly(alcools vinyliques) ; les polyvinylacétals ; les polyvinylpyrrolidones ; les polysaccharides sous forme soluble dans l'eau ; les sulfonates de lignine ; les poly(acides (méth)acryliques) ; les copolymères de (méth)acrylates avec des motifs comonomères à fonctionnalité carboxyle ; le poly(méth)acrylamide ; les poly(acides vinylsulfoniques) et leurs copolymères solubles dans l'eau ; les mélamine-formaldéhyde-sulfonates ; les naphtalène-formaldéhyde-sulfonates ; les copolymères de styrène-acide maléique ; et les copolymères de vinyléther-acide maléique ; et/ou
- une ou plusieurs protéines choisies dans le groupe comprenant la caséine, le caséinate, la protéine de soja ; la gélatine ; et d'autres protéines pouvant être obtenues par hydrolyse protéinique de protéines animales ; et/ou
- des enzymes d'origine biotechnologique.

5. Utilisation de mortiers mousses en tant qu'adhésif pour des revêtements de sol selon la revendication 1 à 3, **caractérisée en ce que** les mortiers mousses contiennent un ou plusieurs stabilisants de mousse, choisis dans le groupe comprenant les acides oléfinesulfoniques ; les acides gras comprenant 16 à 18 atomes de carbone ou leurs sels ; les alcools gras comprenant 10 à 18 atomes de carbone ; les alkylphénols ou les hydroxyalkylphénols comprenant des chaînes alkyle comprenant 10 à 18 atomes de carbone ; les alkyléthersulfates et les alkylaryléthersulfates comprenant 8 à 18 atomes de carbone dans le radical hydrophobe et 1 à 50 motifs d'oxyde d'éthylène ; les alkylsulfonates comprenant 8 à 18 atomes de carbone ; les alkylarylsulfonates présentant des radicaux alkyle comprenant 8 à 18 atomes de carbone ; les esters ou les semi-esters de l'acide sulfosuccinique.

6. Utilisation de mortiers mousses en tant qu'adhésif pour des revêtements de sol selon la revendication 1 à 5, **caractérisée en ce que** les mortiers mousses sont, à raison de 5 à 40% en poids, à base de polymères stabilisés par un colloïde de protection de monomères éthyléniquement insaturés, par rapport au poids sec des mortiers mousses.

7. Utilisation de mortiers mousses en tant qu'adhésif pour des revêtements de sol selon la revendication 1 à 6, **caractérisée en ce que** les polymères de monomères éthyléniquement insaturés sont à base d'un ou de plusieurs monomères choisis dans le groupe comprenant les esters de vinyle, les esters de l'acide (méth)acrylique, les aromatiques de vinyle, les oléfines, les 1,3-diènes et les halogénures de vinyle.

8. Utilisation de mortiers mousses en tant qu'adhésif pour des revêtements de sol selon la revendication 1 à 6, **caractérisée en ce qu'**on choisit, comme polymères de monomères éthyléniquement insaturés, un ou plusieurs copolymères choisis dans le groupe comprenant les copolymères avec de l'acétate de vinyle et 5 à 50% en poids d'éthylène ; Les copolymères avec de l'acétate de vinyle, 1 à 50% en poids d'éthylène et 1 à 50% en poids d'un ester vinylique d'acides monocarboxyliques ramifiés en position α comprenant 9 à 11 atomes de carbone ; les copolymères avec 30 à 75% en poids d'acétate de vinyle, 1 à 30% en poids de laurate de vinyle ou d'ester vinylique d'un acide carboxylique ramifié en position alpha comprenant 9 à 11 atomes de carbone, ainsi que 1 à 30% en poids d'esters de l'acide (méth)acrylique d'alcools non ramifiés ou ramifiés comprenant 1 à 15 atomes de carbone, qui contiennent encore 1 à 40% en poids d'éthylène ; et les copolymères avec de l'acétate de vinyle, 5 à 50% en poids d'éthylène et 1 à 60% en poids de chlorure de vinyle.

9. Utilisation de mortiers mousses en tant qu'adhésif pour des revêtements de sol selon la revendication 1 à 8, **caractérisée en ce que** les mortiers mousses contiennent, à raison de 1 à 40% en poids, du ciment à prise rapide, par rapport au poids total du ciment contenu au total, le ciment à prise rapide étant choisi dans le groupe comprenant le ciment d'aluminate, les ciments de sulfoaluminate de calcium et le ciment hautement alumineux.

10. Utilisation de mortiers mousses en tant qu'adhésif pour des revêtements de sol selon la revendication 1 à 9, **caractérisée en ce que** les revêtements de sol sont choisis dans le groupe comprenant les revêtements de pierre naturelle, de céramique, de verre et de vinyle.

11. Utilisation de mortiers mousses en tant qu'adhésif pour des revêtements de sol selon la revendication 1 à 9, **caractérisée en ce que** les revêtements de sol sont choisis dans le groupe comprenant les carrelages en terre cuite, en grès, en grès cérame, en céramique et en pierre naturelle.

12. Procédé de pose de revêtements de sol, dans lequel des revêtements de sol sont collés à l'aide de mortier mousse en tant qu'adhésif sur un support, le mortier-mousse contenant des polymères, stabilisés par des colloïdes de protection, de monomères éthyléniquement insaturés et un ou plusieurs entraîneurs d'air choisis dans le groupe comprenant les sels d'ammonium et de métal alcalin des hydrogénocarbonates et des carbonates, étant entendu que le mortier mousse ne contient pas de charges.
